# EUROPÄISCHE PATENTSCHRIFT

(11) **EP 3 091 714 B1**
(45) Veröffentlichungstag und Bekanntmachung des Hinweises auf die Patenterteilung: **21.03.2018**
(21) Anmeldenummer: 15166255.8
(22) Anmeldetag: 04.05.2015
(51) Int. Cl.: H04L 29/12

(54) **VERFAHREN ZUR BEREITSTELLUNG EINES NAMENSDIENSTES INNERHALB EINES INDUSTRIELLEN AUTOMATISIERUNGSSYSTEMS UND KOMMUNIKATIONSGERÄT**
METHOD FOR PROVIDING A NAME SERVICE WITHIN AN INDUSTRIAL AUTOMATION SYSTEM AND COMMUNICATION DEVICE
PROCÉDÉ DE PRÉPARATION D'UN SERVICE DE DÉNOMINATION DANS UN SYSTÈME DE COMMUNICATION INDUSTRIELLE ET APPAREIL DE COMMUNICATION

(43) Veröffentlichungstag der Anmeldung: 09.11.2016
(73) Patentinhaber: Siemens Aktiengesellschaft, 80333 München (DE)
(72) Erfinder: Albrecht, Harald, 90475 Nürnberg (DE); Biehler, Georg, 90453 Nürnberg (DE); Talanis, Thomas, 91336 Heroldsbach (DE)

(56) Entgegenhaltungen:
- EP-A1- 1 965 540
- WO-A1-2013/049007
- JAE-HOON JEONG BYUNG-YEOB KIM JUNG-SOO PARK HYOUNG-JUN KIM ETRI: "IPv6 Router Advertisement based DNS Autoconfiguration; draft-jeong-ipv6-ra-dns-autoconf-00.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 17. April 2003 (2003-04-17), XP015003801, ISSN: 0000-0004
- DANIEL PARK SYAM MADANAPALLI SAMSUNG ELECTRONICS S: "IPv6 Extensions for DNS Plug and Play; draft-park-ipv6-extensions-dns-pnp-00.txt" , 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1. April 2003 (2003-04-01), XP015004780, ISSN: 0000-0004
- CHESHIRE M KROCHMAL APPLE INC S: "Multicast DNS; rfc6762.txt", MULTICAST DNS; RFC6762.TXT, INTERNET ENGINEERING TASK FORCE, IETF; STANDARD, INTERNET SOCIETY (ISOC) 4, RUE DES FALAISES CH- 1205 GENEVA, SWITZERLAND, 20. Februar 2013 (2013-02-20), Seiten 1-70, XP015090289, [gefunden am 2013-02-20]
- Harald Albrecht: "Hierarchical (host) domain names in mDNS?", , 16. Juli 2013 (2013-07-16), Seiten 1-2, XP55175361, Gefunden im Internet: URL:http://www.ietf.org/mail-archive/web/d nssd/current/msg00125.html [gefunden am 2015-03-10]

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

In WO 2007/144364 A1 ist ein Verfahren zur Vernetzung einer automatisierten Anlage beschrieben, die zumindest eine Zelle mit einem Subnetz umfasst. Das Subnetz ist über einen Router an ein weiteres Subnetz der automatisierten Anlage angebunden. Zur Vernetzung der automatisierten Anlage wird eine Multicastgruppe bereitgestellt, die sich über beide Subnetze erstreckt. Mittels der Multicastgruppe wird eine Kommunikationsnetzadresse einer Kommunikationsnetzschnittstelle einer Baugruppe detektiert. Dabei ist die Baugruppe der Multicastgruppe zuvor über die Kommunikationsnetzadresse beigetreten, und die Kommunikationsnetzschnittstelle ist zuvor an das Subnetz angeschlossen worden. Über die Kommunikationsnetzadresse wird ein Name an die Kommunikationsnetzschnittstelle der Baugruppe zugewiesen. In einem weiteren Schritt erfolgt eine Ermittlung einer weiteren Kommunikationsnetzadresse der Kommunikationsnetzschnittstelle der Baugruppe, die zumindest einen Teil einer numerischen Repräsentation des Namens aufweist.

Aus US 8 194 661 B2 ist ein Verfahren zur automatischen Konfiguration eines Kommunikationsgeräts innerhalb eines segmentierten Kommunikationsnetzes bekannt, bei dem durch eine Überwachungseinheit überprüft wird, ob ein empfangenes IPv6-Datenpaket eine Router-Bekanntgabe (Router Advertisement) oder eine Router-Abfrage (Router Solicitation) umfasst. Im Fall einer Router-Abfrage wird eine MAC-Absender-Adresse des Datenpakets durch die Überwachungseinheit aus dem IPv6-Daten-paket entfernt. Außerdem wird durch die Überwachungseinheit eine externe MAC-Adresse in das IPv6-Datenpaket eingefügt, um dieses als Multicast-Nachricht an einem Router weiterzuleiten. Bei einer Router-Bekanntgabe entfernt die Überwachungseinheit eine MAC-Router-Adresse aus dem IPv6-Datenpaket und fügt stattdessen eine interne MAC-Adresse in das IPv6-Datenpaket ein, um dieses als Unicast-Nachricht an das zu konfigurierende Kommunikationsgerät weiterzuleiten.

Die ältere europäische Patentanmeldung mit dem Anmeldeaktenzeichen 14166194.2 betrifft ein Verfahren zur Konfiguration eines Kommunikationsgeräts innerhalb eines industriellen Automatisierungssystems, bei dem eine Konfigurationseinheit des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

In der älteren europäischen Patentanmeldung mit dem Anmeldeaktenzeichen EP 14166376.5 ist ein Verfahren zur Bereitstellung eines Namensdienstes innerhalb eines industriellen Kommunikationssystems beschrieben, bei dem IPv6-Präfixe durch Router mittels Nachrichten mit Router-Bekanntgaben in jeweils unterlagerten Teilnetzen verbreitet werden. Dabei umfassen die Router-Bekanntgaben einen topologischen bzw. hierarchischen Namensbestandteil des jeweiligen Routers, der einer räumlichen oder hierarchischen Anordnung des jeweiligen Routers zugeordnet ist. Router-Bekanntgaben mit Namensinformationen aus überlagerten Teilnetzen werden durch unterlagerten Teilnetzen zugeordnete Router entgegen genommen und um einen dem jeweiligen Router zugeordneten topologischen bzw. hierarchischen Namensbestandteil ergänzt und innerhalb des jeweiligen unterlagerten Teilnetzes verbreitet. Aus topologischen bzw. hierarchischen Namensbestandteilen und einem innerhalb ihres jeweiligen Teilnetzes eindeutigen Namensbestandteil erzeugen Kommunikationsendgeräte selbständig ihren Gerätenamen. Aus der älteren europäischen Patentanmeldung mit dem Anmeldeaktenzeichen EP15162021.8 ist bekannt, dass ein Namensdienst-Server eines industriellen Automatisierungssystems zur Bereitstellung eines Namensdienstes Nachrichten mit Router-Bekanntgaben versendet, die Informationen über eine IPv6-Adresse des Namensdienst-Servers umfassen. Kommunikationsendgeräte erzeugen aus mittels Router-Bekanntgaben innerhalb ihres jeweiligen Teilnetzes verbreiteten IPv6-Präfixen selbständig ihre IPv6-Adresse. Außerdem erzeugen Kommunikationsendgeräte aus topologischen bzw. hierarchischen Namensbestandteilen und einem innerhalb ihres jeweiligen Teilnetzes eindeutigen Namensbestandteil selbständig ihren Gerätenamen. Kommunikationsgeräte umfassen jeweils einen Namensdienst-Client für dynamisches DNS (Domain Name System), mittels dessen anhand der IPv6-Adresse des Namensdienst-Servers eine Speicherung einer IPv6-Adresse und eines zugeordneten Gerätenamens des jeweiligen Kommunikationsgeräts im Namensdienst-Server anfordert wird.

Das Dokument "IPv6 Router Advertisement based DNS Autoconfiguration", draft-jeong-ipv6-ra-dns-autoconfig-00, offenbart die Bekanntgabe von DNS Suffixen in Router Advertisements. Der vorliegenden Erfindung liegt die Aufgabe zugrunde, ein Verfahren zur Bereitstellung eines Namensdienstes innerhalb eines industriellen Kommunikationssystems zu schaffen, das sowohl eine einfache Integration bestehender Gerätenamen als auch eine dezentrale automatische Gerätekonfiguration ermöglicht, und ein geeignetes Kommunikationsgerät anzugeben. Diese Aufgabe wird erfindungsgemäß durch ein Verfahren mit den in Anspruch 1 angegebenen Merkmalen und durch ein Kommunikationsgerät mit den in Anspruch 11 angegebenen Merkmalen gelöst. Vorteilhafte Weiterbildungen der vorliegenden Erfindung sind in den abhängigen Patentansprüchen angegeben.

Die vorliegende Erfindung wird nachfolgend an einem Ausführungsbeispiel anhand der Zeichnung näher erläutert. Es zeigt

Die vorliegende Erfindung wird nachfolgend an einem Ausführungsbeispiel anhand der Zeichnung näher erläutert. Es zeigt
- Figur 1: eine schematische Darstellung eines industriellen Automatisierungssystems mit einem DNS-Server, mehreren Teilnetzen und zu konfigurierenden Automatisierungsgeräten,
- Figur 2: eine schematische Darstellung eines Datenaustauschs zwischen dem DNS-Server, IPv6-Routern und einem zu konfigurierenden Automatisierungsgerät,
- Figur 3: eine schematische Darstellung eines Namensdienstmoduls eines Automatisierungsgeräts ohne Routing-Funktionen,
- Figur 4: eine schematische Darstellung eines Namensdienstmoduls eines Automatisierungsgeräts mit Routing-Funktionen.

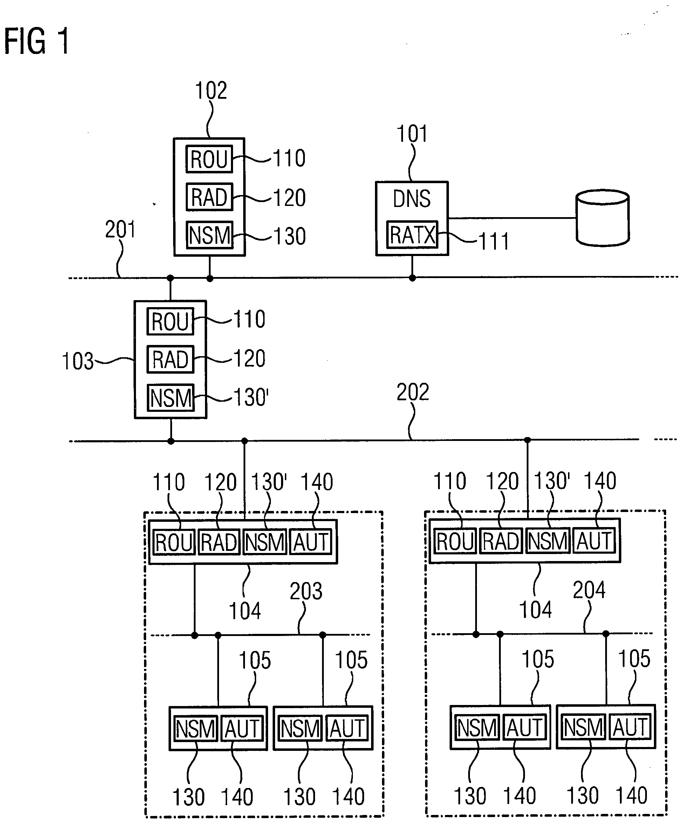

Das in Figur 1 schematisch dargestellte industrielle Automatisierungssystem umfasst einen DNS-Server 101 (Domain Name System) ohne Routing-Funktion, einen Router 102, der einer Basis-Domäne zugeordnet ist, mehrere Teilnetze 201-204 mit zugeordneten Routern 103 bzw. Routing-Funktionen aufweisenden Automatisierungsgeräten 104 und eine Mehrzahl modularer Automatisierungsgeräte 105 ohne Routing-Funktionen. Die Automatisierungsgeräte 105 sind beispielsweise speicherprogrammierbare Steuerungen einer komplexen Maschine 106 und umfassen jeweils ein Namensdienstmodul 130 und ein Automatisierungsmodul 140 mit integrierter Kommunikationseinheit. Eine komplexe Maschine 106 kann auch Automatisierungsgeräte 104 mit einem integrierten Routing-Modul 110 und einer Funktionseinheit 120 zur Verbreitung von Router Advertisements (Router Advertisement Daemon) innerhalb eines maschineninternen Teilnetzes 203, 204 umfassen.

Die Automatisierungsmodule 140 umfassen zusätzlich jeweils zumindest eine Zentraleinheit und eine Eingabe/AusgabeEinheit. Die Eingabe/Ausgabe-Einheiten dienen einem Austausch von Steuerungs- und Messgrößen zwischen dem jeweiligen Automatisierungsgerät 104, 105 und einer durch das Automatisierungsgerät 104, 105 gesteuerten Maschine oder Vorrichtung. Die Zentraleinheiten der Automatisierungsmodule 140 sind insbesondere für eine Ermittlung geeigneter Steuerungsgrößen aus erfassten Messgrößen vorgesehen. Obige Komponenten der Automatisierungsgeräte 104, 105 sind im vorliegenden Ausführungsbeispiel über ein Rückwandbus-System miteinander verbunden.

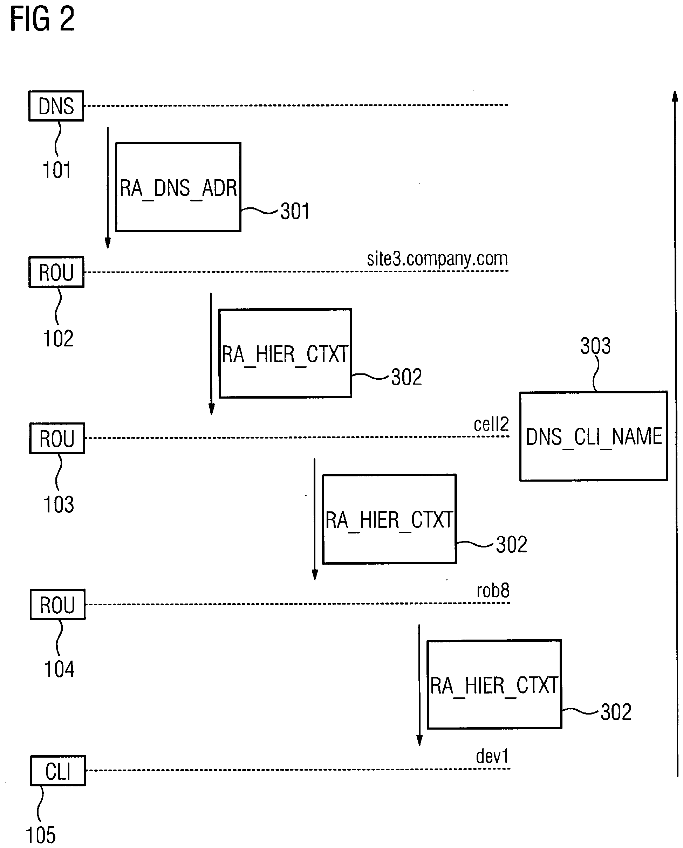

Entsprechend Figur 2 versendet der DNS-Server 101 Nachrichten 301 mit Router Advertisements, die Informationen über eine IPv6-Adresse des DNS-Servers 101 umfassen. Hierzu weist der DNS-Server 101 eine Sendeeinheit 111 zur Erzeugung und Übermittlung von Nachrichten 301 mit Router Advertisements auf, welche die IPv6-Adresse des DNS-Servers 301 umfassen.

Sämtliche Router 102, 103 umfassen im vorliegenden Ausführungsbeispiel neben einem Routing-Modul 110 einen Router Advertisement Daemon 120 und ein Namensdienstmodul 130'. Mittels der Router Advertisement Daemons 120 verbreiten die Router 102, 103 bzw. Automatisierungsgeräte 104 mit Routing-Funktionen IPv6-Präfixe in jeweils unterlagerten Teilnetzen 201-204. Dabei sind die IPv6-Präfixe Bestandteile von Nachrichten mit Router Advertisements, die entsprechend Internet Control Message Protocol Version 6 übermittelt werden. Die Router Advertisements umfassen einen topologischen bzw. hierarchischen Namensbestandteil des jeweiligen Routers, wobei der topologische bzw. hierarchische Namensbestandteil einer räumlichen oder hierarchischen Anordnung des jeweiligen Routers zugeordnet ist.

Entsprechend Figur 2 empfängt der Router 102, welcher der Basis-Domäne zugeordnet ist, vom DNS-Server 101 die Nachricht 301 mit Router Advertisement, welche die IPv6-Adresse des DNS-Servers 301 umfasst, und übernimmt diese Information für seine eigenen Router Advertisements. Hierbei fügt der Router 102 seinen Nachrichten 301 mit Router Advertisements im vorliegenden Ausführungsbeispiel den Namensbestandteil "site3. company.com" als hierarchischen Namenskontext RA_HIER_CTXT hinzu. Durch jeden unterlagerten Router 103 bzw. jedes Automatisierungsgerät 104 mit Routing-Funktionen wird ein weiterer topologischer bzw. hierarchischer Namensbestandteil ergänzt, der einer räumlichen oder hierarchischen Anordnung des jeweiligen Routers 103 bzw. Automatisierungsgeräts 104 zugeordnet ist. Entsprechende räumliche oder hierarchische Angaben, im vorliegenden Ausführungsbeispiel "cell2" und "rob8" werden dabei zu einem bereits vorhandenen hierarchischen Namenskontext RA_HIER_CTXT hinzugefügt. Beispielsweise wird "site3.company.com" durch "cell2" bzw. "rob8" zu "cell2.site3.company.com" bzw. "rob8.cell2.site3.company.com" vervollständigt.

Router Advertisements mit Namensinformationen aus überlagerten Teilnetzen werden mittels des jeweiligen Namensdienstmoduls 130' durch unterlagerten Teilnetzen zugeordnete Router 102 bzw. Automatisierungsgeräte 103 entgegen genommen und um einen dem jeweiligen Router 102 bzw. Automatisierungsgerät 103 zugeordneten topologischen bzw. hierarchischen Namensbestandteil ergänzt. Mittels des jeweiligen Router Advertisement Daemon 120 werden die Router Advertisements mit den ergänzten Namensinformationen innerhalb des jeweiligen unterlagerten Teilnetzes verbreitet.

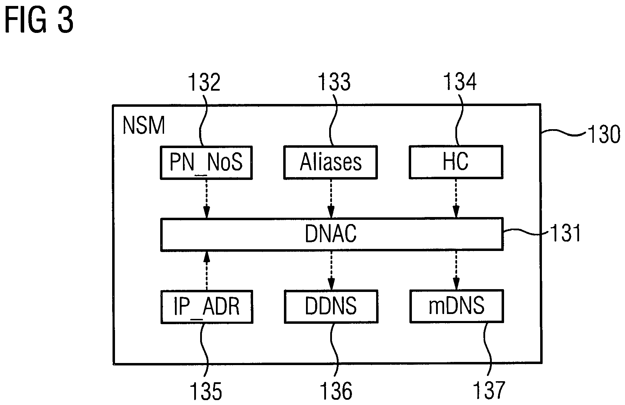

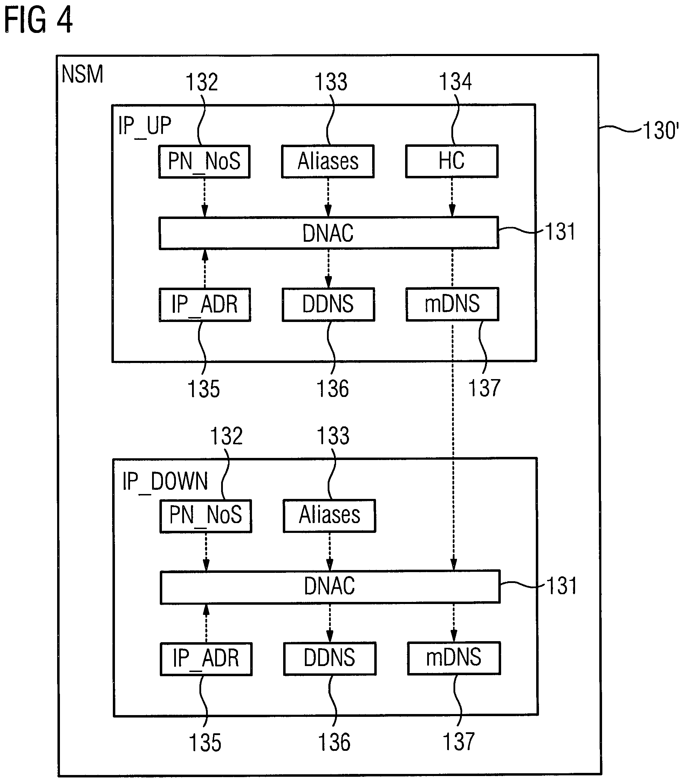

Die Automatisierungsgeräte 104, 105 erzeugen jeweils mittels ihres Namensdienstmoduls 130, 130' aus empfangenen topologischen bzw. hierarchischen Namensbestandteilen und einem innerhalb ihres jeweiligen Teilnetzes eindeutigen Namensbestandteil selbständig ihren Gerätenamen. Hierzu werten die Automatisierungsgeräte 104, 105 den hierarchischen Namenskontext RA_HIER_CTXT der Router Advertisements aus. Darüber hinaus erzeugen die Automatisierungsgeräte 104, 105 aus mittels Router Advertisements innerhalb ihres jeweiligen Teilnetzes verbreiteten IPv6-Präfixen selbständig ihre IPv6-Adresse. Die Namensdienstmoduls 130, 130' der Automatisierungsgeräte 104, 105 umfassen entsprechend Figur 3 bzw. Figur 4 jeweils pro IP-Schnittstelle einen Namensdienst-Client 136 für dynamisches DNS umfassen, mittels dessen anhand der IPv6-Adresse des Namensdienst-Servers eine Speicherung einer IPv6-Adresse und eines zugeordneten Gerätenamens des jeweiligen Kommunikationsgeräts im Namensdienst-Server anfordert wird. Hierzu übermitteln die Automatisierungsgeräte 104, 105 jeweils selbständig eine Nachricht 303 mit einer Registrierungsanforderung an den DNS-Server 101, durch die eine Speicherung ihrer Gerätename-Adress-Zuordnung im Namensdient-Server 101 ausgelöst wird.

Darüber hinaus umfassen die Namensdienstmodule 130, 130' der Router 102, 103 und der Automatisierungsgeräte 104, 105 entsprechend Figur 3 bzw. Figur 4 eine Domain Name Auto Completer 131 als Namensdienst-Komponente. Der Domain Name Auto Completer 131 dient jeweils zur Überprüfung, ob dem jeweiligen Router bzw. Automatisierungsgerät ein Gerätename mit einem topologischen bzw. hierarchischen Namensbestandteil zugeordnet ist, der eine räumliche oder hierarchische Anordnung des jeweiligen Routera bzw. Automatisierungsgeräts im wesentlichen vollständig bezeichnet. Für diese Überprüfung greift der Domain Name Auto Completer 131 im vorliegenden Ausführungsbeispiel auf Speichereinheiten 132-134 zu, in denen jeweils PROFINET-Gerätenamen (PROFINET Name of Station), Aliasnamen und hierarchischer Namenskontext gespeichert sind.

Bei einem positiven Überprüfungsergebnis behandeln die Router bzw. Automatisierungsgeräte jeweils ihren zugeordneten Gerätenamen als vollständigen Gerätenamen. Andernfalls erzeugen die Router bzw. Automatisierungsgeräte bei einem negativen Überprüfungsergebnis aus mittels Nachrichten mit Router-Bekanntgaben verbreiteten topologischen bzw. hierarchischen Namensbestandteilen sowie einem innerhalb ihres jeweiligen Teilnetzes eindeutigen Namensbestandteil selbständig ihren vollständigen Gerätenamen.

Mittels ihrer Namensdienst-Clients 136 fordern die Router bzw. Automatisierungsgeräte eine Speicherung ihrer Kommunikationsnetzadressen sowie ihrer zugeordneten vollständigen Gerätenamen und Aliasnamen im DNS-Server an. Hierzu greift der jeweilige Domain Name Auto Completer 131 auf eine Speichereinheit 135 zu, in der die IPv6-Adresse für seine zugeordnete IP-Schnittstelle gespeichert ist. Zusätzlich umfassen die Namensdienstmodule 130, 130' pro IP-Schnittstelle eine Namensdienst-Komponente 137 für Multicast DNS, mittels der sie Angaben über Kommunikationsnetzadressen sowie zugeordnete vollständige Gerätenamen und Aliasnamen innerhalb ihres jeweiligen Teilnetzes entsprechend Multicast DNS Protokoll verbreiten.

Verfügt ein Router oder Automatisierungsgerät über mehrere IP-Schnittstellen und führt es zwischen diesen IP-Schnittstellen IP-Routing aus, umfasst das jeweilige Namensdienstmodul 130' entsprechend Figur 4 jeweils einen Domain Name Auto Completer 131 für überlagerte Netzebenen (IP_UP) und einen Domain Name Auto Completer 131 für unterlagerte Netzebenen (IP_DOWN). Auf diese Weise kann das jeweilige Namensdienstmodul 130' von einer überlagerten Netzebene einen hierarchischen Namenskontext empfangen, diesen erweitern und an unterlagerte Netzebenen weitergeben.

Dementsprechend verbreiten Router bzw. Automatisierungsgeräte, die jeweils Router- und Automatisierungsfunktionen aufweisen, bei einem positiven Überprüfungsergebnis einen von ihrem Gerätenamen umfassten vollständigen topologischen bzw. hierarchischen Namensbestandteil als Namensinformationen innerhalb ihres jeweiligen unterlagerten Teilnetzes mittels Router-Bekanntgaben. Dagegen nehmen Router bzw. Automatisierungsgeräte, die jeweils Router- und Automatisierungsfunktionen aufweisen, bei einem negativen Überprüfungsergebnis Router-Bekanntgaben mit Namensinformationen aus überlagerten Teilnetzen entgegen, ergänzen diese um einen topologischen bzw. hierarchischen Namensbestandteil, der ihrer jeweiligen räumlichen oder hierarchischen Anordnung zugeordnet ist, und verbreiten ergänzte Namensinformationen innerhalb ihres jeweiligen unterlagerten Teilnetzes mittels Router-Bekanntgaben.

Router, die keine Automatisierungsfunktionen aufweisen, nehmen Router-Bekanntgaben mit Namensinformationen aus überlagerten Teilnetzen Router entgegen und verbreiten diese unverändert innerhalb ihres jeweiligen unterlagerten Teilnetzes mittels Router-Bekanntgaben. Des weiteren behandeln Router, die einem Namenshierarchieursprung zugeordnet bzw. an diesem angeordnet sind, ihre zugeordneten Gerätenamen stets als vollständigen Gerätenamen. Dies trifft im vorliegenden Ausführungsbeispiel auf den Router 102 zu, der zur Basis-Domäne "site3.company.com" zugeordnet ist. Das Namensdienstmodul dieses Routers kann analog zur Darstellung entsprechend Figur 3 ausgestaltet sein, da kein hierarchischer Namenskontext übernommen, sondern dieser für unterlagerte Netzebenen vorgegeben wird.

## Patentansprüche

1. Verfahren zur Bereitstellung eines Namensdienstes innerhalb eines industriellen Automatisierungssystems, bei dem
- Kommunikationsgeräte (102-105) des industriellen Automatisierungssystems jeweils mittels einer Namensdienst-Komponente (130, 130') überprüfen, ob dem jeweiligen Kommunikationsgerät ein Gerätename mit einem topologischen und/oder hierarchischen Namensbestandteil zugeordnet ist, der eine räumliche oder hierarchische Anordnung des jeweiligen Kommunikationsgeräts vollständig bezeichnet,
- die Kommunikationsgeräte (102-105) jeweils bei einem positiven Überprüfungsergebnis ihren zugeordneten Gerätenamen als vollständigen Gerätenamen behandeln,
- die Kommunikationsgeräte (102-105) jeweils bei einem negativen Überprüfungsergebnis aus mittels Nachrichten (301-302) mit Router-Bekanntgaben verbreiteten topologischen und/oder hierarchischen Namensbestandteilen sowie einem innerhalb ihres jeweiligen Teilnetzes (201-204) eindeutigen Namensbestandteil selbständig ihren vollständigen Gerätenamen erzeugen,
- Kommunikationsgeräte (192-104), die jeweils eine Router-Funktion aufweisen und in ein Automatisierungsgerät integriert sind, jeweils bei einem negativen Überprüfungsergebnis die Router-Bekanntgaben mit Namensinformationen aus überlagerten Teilnetzen (201-202) entgegen nehmen, um einen topologischen und/oder hierarchischen Namensbestandteil ergänzen, der ihrer jeweiligen räumlichen oder hierarchischen Anordnung zugeordnet ist, und ergänzte Namensinformationen innerhalb ihres jeweiligen unterlagerten Teilnetzes (202-204) mittels Router-Bekanntgaben verbreiten,
- die Kommunikationsgeräte (102-105) jeweils mittels eines Namensdienst-Client (136) für dynamisches DNS eine Speicherung ihrer Kommunikationsnetzadresse sowie ihres zugeordneten vollständigen Gerätenamens in einem Namensdienst-Server (101) anfordern und/oder jeweils mittels einer Namensdienst-Komponente (137) für Multicast DNS Angaben über ihre Kommunikationsnetzadresse sowie ihren zugeordneten vollständigen Gerätenamen innerhalb ihres jeweiligen Teilnetzes (202-204) entsprechend Multicast DNS Protokoll verbreiten.

2. Verfahren nach Anspruch 1,
bei dem Kommunikationsgeräte (102-104), die jeweils eine Router-Funktion aufweisen und in ein Automatisierungsgerät integriert sind, jeweils bei einem positiven Überprüfungsergebnis einen von ihrem Gerätenamen umfassten vollständigen topologischen und/oder hierarchischen Namensbestandteil als Namensinformationen innerhalb ihres jeweiligen unterlagerten Teilnetzes (202-204) mittels Router-Bekanntgaben verbreiten.

3. Verfahren nach einem der Ansprüche 1 oder 2,
bei dem ein einem Wurzel-Netzknoten zugeordnetes Kommunikationsgerät seinen zugeordneten Gerätenamen als vollständigen Gerätenamen behandelt.

4. Verfahren nach einem der Ansprüche 1 bis 3,
bei dem die Kommunikationsnetzadressen der Kommunikationsgeräte (102-105) IPv6-Adressen sind, und bei dem die Kommunikationsgeräte aus mittels Router-Bekanntgaben innerhalb ihres jeweiligen Teilnetzes verbreiteten IPv6-Präfixen selbständig ihre IPv6-Adresse erzeugen.

5. Verfahren nach Anspruch 4,
bei dem Nachrichten mit Router-Bekanntgaben entsprechend Internet Control Message Protocol Version 6 übermittelt werden.

6. Verfahren nach einem der Ansprüche 1 bis 5,
bei dem die Gerätenamen PROFINET-Gerätenamen sind.

7. Kommunikationsgerät zur Durchführung eines Verfahrens nach einem der Ansprüche 1 bis 6 mit
- einer Namensdienst-Komponente (130, 130') zur Überprüfung, ob dem jeweiligen Kommunikationsgerät (102-105) ein Gerätename mit einem topologischen und/oder hierarchischen Namensbestandteil zugeordnet ist, der eine räumliche oder hierarchische Anordnung des jeweiligen Kommunikationsgeräts vollständig bezeichnet, wobei das Kommunikationsgerät (102-105) dafür ausgestaltet und eingerichtet ist, bei einem positiven Überprüfungsergebnis seinen zugeordneten Gerätenamen als vollständigen Gerätenamen zu behandeln und bei einem negativen Überprüfungsergebnis aus topologischen und/oder hierarchischen Namensbestandteilen sowie einem innerhalb ihres jeweiligen Teilnetzes (201-204) eindeutigen Namensbestandteil selbständig seinen vollständigen Gerätenamen zu erzeugen,
- einer Router-Funktion und einer Integration in ein Automatisierungsgerät, wobei das Kommunikationsgerät (102-105) dafür ausgestaltet und eingerichtet ist, bei einem negativen Überprüfungsergebnis Router-Bekanntgaben mit Namensinformationen aus überlagerten Teilnetzen (201-202) entgegen nehmen, um einen topologischen und/oder hierarchischen Namensbestandteil ergänzen, der ihrer jeweiligen räumlichen oder hierarchischen Anordnung zugeordnet ist, und ergänzte Namensinformationen innerhalb ihres jeweiligen unterlagerten Teilnetzes (202-204) mittels Router-Bekanntgaben verbreiten,
- einem Namensdienst-Client (136) für dynamisches DNS zur Anforderung einer Speicherung einer Kommunikationsnetzadresse des Kommunikationsgeräts sowie des vollständigen Gerätenamens in einem Namensdienst-Server und/oder einer Namensdienst-Komponente (137) für Multicast DNS zur Verbreitung von Angaben über die Kommunikationsnetzadresse sowie den vollständigen Gerätenamen innerhalb eines Teilnetzes entsprechend Multicast DNS Protokoll.

8. Kommunikationsgerät nach Anspruch 7,
bei dem das Kommunikationsgerät einem Wurzel-Netzknoten zugeordnet ist.

## Claims

1. Method for providing a name service within an industrial automation system, in which
- communication devices (102-105) of the industrial automation system in each case check by means of a name service component (130, 130') whether a device name with a topological and/or hierarchical name component which completely designates a spatial or hierarchical arrangement of the respective communication device is allocated to the respective communication device,
- the communication devices (102-105) in each case, in the case of a positive result of the check, treat their associated device name as complete device name,
- the communication devices (102-105) in each case, in the case of a negative result of the check, independently generate their complete device name from topological and/or hierarchical name components distributed by means of messages (301-302) with router advertisements and a name component unambiguous within their respective subnetwork (201-204),
- communication devices (102-104) which have in each case a router function and are integrated in an automation device in each case, in the case of a negative result of the check, receive the router advertisements with name information from higher-level subnetworks (201-202), supplement these by a topological and/or hierarchical name component which is allocated to their respective spatial or hierarchical arrangement, and distribute supplemented name information within their respective lower-level subnetwork (202-204) by means of router advertisements,
- the communication devices (102-105) in each case request by means of a name service client (136) for dynamic DNS a storage of their communication network address and their associated complete device name in a name service server (101) and/or
in each case distribute by means of a name service component (137) for multicast DNS information about their communication network address and their associated complete device name within their respective subnetwork (202-204) in accordance with the Multicast DNS Protocol.

2. Method according to Claim 1,
in which communication devices (102-104) which have in each case a router function and are integrated in an automation device, in each case, in the case of a positive result of the check, distribute a complete topological and/or hierarchical name component comprised by their device name as name information within their respective lower-level subnetwork (202-204) by means of router advertisements.

3. Method according to one of Claims 1 and 2,
in which a communication device allocated to a root network node treats its associated device name as complete device name.

4. Method according to one of Claims 1 to 3,
in which the communication network addresses of the communication devices (102-105) are IPv6 addresses and in which the communication devices generate their IPv6 address independently from IPv6 prefixes distributed by means of router advertisements within their respective subnetwork.

5. Method according to Claim 4,
in which messages with router advertisements are transmitted in accordance with Internet Control Message Protocol Version 6.

6. Method according to one of Claims 1 to 5,
in which the device names are PROFINET device names.

7. Communication device for carrying out a method according to one of Claims 1 to 6, comprising
- a name service component (130, 130') for checking whether a device name with a topological and/or hierarchical name component which completely designates a spatial or hierarchical arrangement of the respective communication device is allocated to the respective communication device (102-105), the communication device (102-105) being designed and configured for treating, in the case of a positive result of the check, its associated device name as complete device name and, in the case of a negative result of the check, independently generating its complete device name from topological and/or hierarchical name components and a name component which is unambiguous within their respective subnetwork (201-204),
- a router function and an integration in an automation device, the communication device (102-105) being designed and configured, in the case of a negative result of the check, for receiving router advertisements with name information from higher-level subnetworks (201-202), supplementing these by a topological and/or hierarchical name component which is allocated to their respective spatial or hierarchical arrangement, and distributing supplemented name information within their respective lower-level subnetwork (202-204) by means of router advertisements,
- a name service client (136) for dynamic DNS for requesting a storage of a communication network address of the communication device and of the complete device name in a name service server and/or a name service component (137) for multicast DNS for distributing information about the communication network address and the complete device name within a subnetwork according to Multicast DNS Protocol.

8. Communication device according to Claim 7,
in which the communication device is allocated to a root network node.

## Revendications

1. Procédé de mise à disposition d'un service de dénomination au sein d'un système d'automatisation industrielle, dans lequel
- des appareils (102 à 105) de communication du système d'automatisation industrielle contrôlent, chacun au moyen d'un composant (130, 130') de service de dénomination, s'il est affecté à l'appareil de communication respectif une dénomination d'appareil par une partie constitutive de dénomination topologique et/ou hiérarchique, qui désigne complètement l'ordonnancement spatial ou hiérarchique de l'appareil de communication respectif,
- les appareils (102 à 105) de communication traitent chacun, si le résultat du contrôle est positif, leurs dénominations d'appareil affectées, comme des dénominations d'appareil complètes,
- les appareils (102 à 105) de communication produisent chacun, si le résultat du contrôle est négatif, à partir de parties constitutives de dénomination topologiques et/ou hiérarchiques diffusées par des communiqués de routeur au moyen de messages (301 à 302), ainsi que d'une partie constitutive de dénomination univoque au sein de leur sous-réseau (201 à 204) respectif, automatiquement leur dénomination d'appareil complète,
- les appareils (102 à 104) de communication, qui ont chacun une fonction de routeur et qui sont intégrés dans un appareil d'automatisation, reçoivent chacun, si le résultat du contrôle est négatif, les communiqués de routeur avec des informations de dénomination à partir de sous-réseaux (201 à 202) inférieurs pour compléter une partie constitutive de dénomination topologique et/ou hiérarchique, qui est affectée à leur ordonnancement spatial ou hiérarchique respectif, et diffusent des informations de dénomination complétées au sein de leurs sous-réseaux (202 à 204) inférieures respectifs au moyen de communiqués de routeur,
- les appareils (102 à 105) de communication demandent chacun, au moyen d'un client (136) de service de dénomination, pour un DNS dynamique, une mémorisation de leur adresse de réseau de communication ainsi que de leur dénomination d'appareil complète affectée dans un serveur (101) de service de dénomination et/ou diffusent chacun, au moyen d'un composant (137) de service de dénomination pour des indications DNS multicast, par leur adresse de communication ainsi que leurs dénominations d'appareil complètes affectées au sein de leurs sous-réseaux (202 à 204) respectifs, un protocole DNS multicast correspondant.

2. Procédé suivant la revendication 1,
dans lequel des appareils (102 à 104) de communication, qui ont chacun une fonction de routeur et sont intégrés dans un appareil d'automatisation, diffusent chacun, si le résultat du contrôle est positif, une partie constitutive de dénomination topologique et/ou hiérarchique complète comprise par leur dénomination d'appareil, comme information de dénomination au sein de leurs sous-réseaux (202 à 204) inférieurs respectifs au moyen de communiqués de routeur.

3. Procédé suivant l'une des revendications 1 ou 2,
dans lequel un appareil de communication affecté à un noeud de réseau racine traite sa dénomination d'appareil affecté comme dénomination d'appareil complète.

4. Procédé suivant l'une des revendications 1 à 3,
dans lequel les adresses de réseau de communication des appareils (102 à 105) de communication sont des adresses IPv6 et dans lequel les appareils de communication produisent automatiquement leur adresse IPv6 à partir de préfixes IPv6 diffusés au moyen de communiqués de routeur au sein de leur sous-réseau respectif.

5. Procédé suivant la revendication 4,
dans lequel on transmet des messages par des communiqués de routeur conformément à Internet Control Message Protocol Version 6.

6. Procédé suivant l'une des revendications 1 à 5,
dans lequel les dénominations d'appareil sont des dénomination d'appareil PROFINET.

7. Appareil de communication pour effectuer un procédé suivant l'une des revendications 1 à 6, comprenant
- un composant (130, 130') de service de dénomination pour contrôler s'il est affecté à l'appareil (102 à 105) de communication respectif une dénomination d'appareil ayant une partie constitutive de dénomination topologique et/ou hiérarchique, qui désigne complètement un ordonnancement spatial ou hiérarchique de l'appareil de communication respectif, l'appareil (102 à 105) de communication étant conformé et conçu pour, si le résultat du contrôle est positif, traiter sa dénomination d'appareil affectée comme une dénomination d'appareil complète et, si le résultat du contrôle est négatif, produire automatiquement sa dénomination d'appareil complète à partir de parties constitutives de dénomination topologiques et/ou hiérarchiques, ainsi que d'une partie constitutive de dénomination univoque au sein de son sous-réseau (201 à 204) respectif,
- une fonction de routeur et une intégration dans un appareil d'automatisation, l'appareil (102 à 105) de communication étant conformé et conçu pour recevoir, si le résultat du contrôle est négatif, des communiqués de routeur ayant des informations de dénomination à partir de sous-réseaux (201 à 202) supérieurs pour compléter une partie constitutive de dénomination topologique et/ou hiérarchique, qui est affectée à leur ordonnancement spatial ou hiérarchique respectif et diffuser des informations de dénomination complétées au sein de leur sous-réseau (202 à 204) inférieur respectif au moyen de communiqués de routeur,
- un client (136) de service de dénomination pour un DNS dynamique, afin de demander une mémorisation d'une adresse de réseau de communication de l'appareil de communication, ainsi que de la dénomination d'appareil complète dans un serveur de service de dénomination et/ou d'un composant (137) de service de dénomination pour un DNS multicast, afin de diffuser des indications sur l'adresse de réseau de communication, ainsi que la dénomination d'appareil complète au sein d'un sous-réseau, conformément à Muticast DNS Protokoll.

8. Appareil de communication suivant la revendication 7,
dans lequel l'appareil de communication est affecté à un noeud de réseau racine.
